(19) Europäisches Patentamt / European Patent Office / Office européen des brevets

(11) **EP 2 783 457 B1**

(12) **EUROPÄISCHE PATENTSCHRIFT**

(45) Veröffentlichungstag und Bekanntmachung des Hinweises auf die Patenterteilung:
**13.07.2016 Patentblatt 2016/28**

(21) Anmeldenummer: **12784509.7**

(22) Anmeldetag: **22.10.2012**

(51) Int Cl.:
**H02M 7/10** *(2006.01)*      **H02M 7/217** *(2006.01)*

(86) Internationale Anmeldenummer:
**PCT/EP2012/070853**

(87) Internationale Veröffentlichungsnummer:
**WO 2013/075897 (30.05.2013 Gazette 2013/22)**

(54) **VERDOPPLER-GLEICHRICHTER FÜR MEHRPHASIGES KONTAKTLOSES ENERGIEÜBERTRAGUNGSSYSTEM**

DOUBLING RECTIFIER FOR MULTI-PHASE CONTACTLESS ENERGY TRANSFER SYSTEM

REDRESSEUR DOUBLEUR POUR SYSTÈME DE TRANSMISSION D'ÉNERGIE MULTIPHASÉ SANS CONTACT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.11.2011 DE 102011119259**

(43) Veröffentlichungstag der Anmeldung:
**01.10.2014 Patentblatt 2014/40**

(73) Patentinhaber: **Bombardier Primove GmbH 10785 Berlin (DE)**

(72) Erfinder: **TURKI, Faical 59192 Bergkamen (DE)**

(74) Vertreter: **Patentanwälte Bressel und Partner mbB Potsdamer Platz 10 10785 Berlin (DE)**

(56) Entgegenhaltungen:
DE-A1- 19 754 239      JP-A- S6 192 172
JP-A- S60 109 766      US-A- 4 651 268
US-A- 5 047 912        US-A- 5 936 854
US-A1- 2006 034 109    US-A1- 2011 198 176

EP 2 783 457 B1

**Beschreibung**

Die vorliegende Erfindung betrifft einen sekundärseitigen Gleichrichter eines induktiven n-phasigen Energieübertragungssystems mit N größer gleich 3, wobei das Energieübertragungssystem in jedem Strang einen Resonanzschwingkreis mit jeweils mindestens einer Induktivität und mindestens einer Kapazität aufweist, und die sekundärseitigen Resonanzschwingkreise mit primärseitigen Resonanzschwingkreisen magnetisch koppelbar sind, wobei die sekundärseitigen Resonanzschwingkreise im Stern oder Vieleck geschaltet und über Außenleiter mit einem Gleichrichter in Verbindung sind.

Die JP S61 92172 A offenbart einen dreiphasigen Spannungsgleichrichter. Hierbei offenbart die Druckschrift eine Reihenschaltung von vier Dioden, wobei ein Kondensator elektrisch parallel zu dieser Reihenschaltung geschaltet ist.

Auch die JP S60 109766 A offenbart einen solchen dreiphasigen Spannungsgleichrichter.

Die US 5,936,854 A offenbart einen zweiphasigen Gleichrichterschaltkreis mit sechs Dioden. Ein Kondensator ist hierbei parallel zu einem ersten Zweig mit einer Reihenschaltung von zwei Dioden und einem weiteren Zweig mit einer Reihenschaltung von zwei weiteren Dioden geschaltet. Die US 2011/198176 A1 offenbart einen dreiphasigen Gleichrichter mit drei parallel geschalteten Zweigen, die jeweils eine Reihenschaltung von zwei Dioden umfassen.

Die US 5,047,912 A offenbart einen zweiphasigen Gleichrichter mit vier Anschlüssen. Dieser Gleichrichter umfasst einen ersten Zweig mit einer Reihenschaltung von zwei Dioden und einen weiteren Zweig mit einer Reihenschaltung von zwei weiteren Dioden, wobei der erste und der weitere Zweig parallel geschaltet sind.

Die US 4,651,268 A1 offenbart einen mehrstufigen Gleichrichter mit einem Transformator, mit in Reihe geschalteten Dioden und einem ersten, zweiten, dritten und vierten Kondensator. Eine Wechselspannungsquelle ist mit einer Primärwindung des Transformators verbunden. Ein neutraler Punkt einer Sekundärwindung des Transformators ist geerdet. Ein Anschlusspunkt der Dioden-Reihenschaltung ist mit dem neutralen Punkt verbunden, sodass die Dioden in dieselbe Richtung ausgerichtet sind. Der erste Kondensator ist zwischen den beiden Anschlusspunkten der Dioden-Reihenschaltung angeordnet.

Die US 2006/0034109 A1 offenbart eine kapazitive Energieversorgungsschaltung, mit einem Energiespeicherelement, das zwischen zwei Ausgangsanschlüsse zur Bereitstellung einer gleichgerichteten Ausgangsspannung angeordnet ist, wobei mindestens ein Kondensator und eine erste Diode in Reihe zwischen einem ersten Eingangsanschluss zum Anlegen einer Wechselspannung und einem der Ausgangsanschlüsse angeordnet ist.

Die DE 197 5 239 A1 offenbart ein Kondensatornetzteil umfassend einen Ladekondensator zum Aufladen eines weiteren Kondensators (Speicherkondensator), von welchem die Ausgangsspannung zum Betreiben eines Stromverbrauchers abgreifbar ist, einen zwischen dem Ladekondensator und dem Speicherkondensator angeordneten Gleichrichter und einer zur Stabilisierung des Kondensatornetzteils vorgesehenen Durchbruchdiode.

Bei der Auslegung der Reihen-Resonanzkreise für den Sekundärteil der kontaktlosen Energieübertragung, ist maßgebend für die internen Spannungen innerhalb des Gerätes die Nennblindspannung, die in der Regel größer als die Wirkspannung ist. Je größer der Induktivitätswert einer Phase, desto höher die Blindleistung, die mit den Resonanzkondensatoren kompensiert werden muss. Sowohl der Induktivitätswert als auch die Blindspannung verhält sich dabei quadratisch zur Windungszahl der Wicklung. Die Wirkspannung verhält sich hingegen linear zur Windungszahl. Würde man bei einer gegebenen Abgabewirkleistung die Wirkspannung des Schwingkreises über die Windungszahl verringern, würde der Nenn-strom aufgrund der linearen bzw. proportionalen Abhängigkeitsteigen steigen. Da jedoch die Blindspannung sich quadratisch zur Windungszahl ändert, wird die Blindleistung verringert. Dies hat zur Folge, dass die für die Kompensation notwendigen Kondensatoren kleiner dimensioniert werden können, wodurch drastische Volumen-, Gewichts- und Kostenersparnisse möglich wären.

Bei der kontaktlosen Energieübertragung wird im Allgemeinen eine induzierte Spannung im Sekundärkreis eines Luftspalttrafos gleichgerichtet. Die resultierende Gleichspannung wird anschließend für die Versorgung von Verbrauchern genutzt. Für hohe Leistungsanforderungen ist die Mehrphasigkeit des Systems von Vorteil, da hiermit die Leistungsdichte steigt.

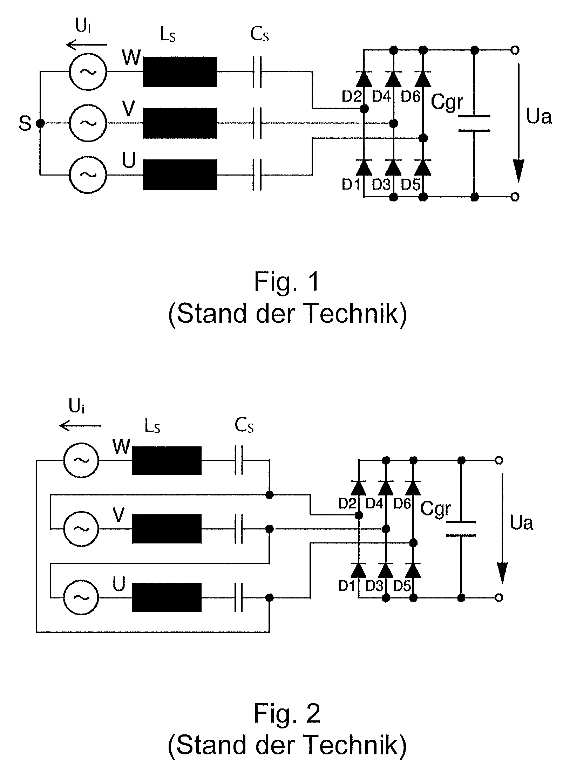

Die Figur 1 zeigt einen einfachen Sekundär-Gleichrichter, der aus einer Vollbrücke aus Dioden besteht. Die in Figur 1 dargestellte Sekundärseite des Energieübertragungssystems ist als dreiphasiges System ausgebildet, wobei die die drei Stränge bildenden Resonanzschwingkreise aus den Induktivitäten $L_s$ und den Resonanzkondensatoren $C_s$ bestehen und im Stern zusammen geschaltet sind. Die Ersatzspannungsquellen $U_i$ stehen für die in den Sekundärwicklungen induzierten Spannungen $U_i$. Ein dreiphasiges System ist das einfachste mehrphasige kontaktlose Energieübertragungssystem. Grundsätzlich bezieht sich dieses Dokument aber auf alle möglichen Phasenzahlen. Vorteilhaft sind meist ungerade Zahlen.

Der in Figur 1 dargestellte Vollbrücken-Gleichrichter erzeugt eine Gleichspannung, die in erster Linie von der Kopplung zum Primärkreis und auch von der Last abhängig ist. Wenn eine konstante Gleichspannung erforderlich ist, wird die Variable Gleichrichter-Spannung über einen nachgeschalteten, nicht dargestellten, DC/DC-Wandler geregelt.

Die Figur 2 zeigt die Sekundärseite des Energieübertragungssystems mit im Dreieck verschalteten Strängen.

Aufgabe der vorliegenden Erfindung ist es, einen Gleichrichter bereitzustellen, der aus wenigen elektronischen Bauteilen besteht, und eine höhere Ausgangsspannung erzeugt, als ein Vollbrücken-Gleichrichter. Eine weitere Aufgabe der Erfindung ist es, den erfindungsgemäßen sekundärseitigen Gleichrichter dahingehend weiter zu entwickeln, das eine variable Ausgangsspannung erzeugbar ist.

Diese Aufgabe wird vorteilhaft mit einem sekundärseitigen Gleichrichter mit den Merkmalen des Anspruchs 1 gelöst. Vorteilhafte Weiterbildungen des Gleichrichters gemäß Anspruch 1 ergeben sich durch die Merkmale der Unteransprüche.

Der erfindungsgemäße Gleichrichter zeichnet sich vorteilhaft dadurch aus, dass lediglich eine der Phasenanzahl entsprechende Anzahl von Dioden sowie ein Glättungskondensator benötigt werden. Bei gleicher Dimensionierung der Windungszahlen und übrigen Bauelemente wird gegenüber einem herkömmlichen Vollbrückengleichrichter eine doppelt so hohe Ausgangsspannung erzielt. Sofern sich die benötigte Ausgangsspannung gegenüber einem Energieübertragungssystem mit Vollbrückengleichrichter nicht ändert, kann vorteilhaft die Windungszahl der Übertragerspulen verringert werden. Wie oben beschrieben, verringert sich auch die zu kompensierende Blindleistung, weshalb die Kondensatoren kleiner dimensioniert werden können. Hierdurch können die sekundärseitigen Pickups des Energieübertragungssystems vorteilhaft kleiner ausgebildet werden, wodurch neben einer Kostenreduzierung auch Gewichtseinsparungen einhergehen.

Durch die Möglichkeit, die sekundärseitigen Resonanzschwingkreissträge entweder im Stern oder in einem N-Eck zusammenzuschalten, kann die Ausgangsspannung vorteilhaft an die jeweiligen Bedingungen angepasst werden. Die Sternschaltung ist jedoch in der Regel zu bevorzugen. Mit den nachfolgend in der Tabelle aufgeführten Schaltungen lassen sich verschiedene Ausgangsspannungen erzielen.

| Topologie | Ausgangsspannung |
|---|---|
| Dreiphasiger Gleichrichter in Dreieckschaltung nach dem Stand der Technik | $\sqrt{2} * U_i$ |
| Dreiphasiger Gleichrichter in Sternschaltung nach dem Stand der Technik | $\sqrt{3}\,\sqrt{2}\,U_i$ |
| Dreiphasiger Verdoppler in Dreieckschaltung gemäß der Erfindung | $2\,\sqrt{2}\,U_i$ |
| Dreiphasiger Verdoppler in Sternschaltung gemäß der Erfindung | $2\,\sqrt{3}\,\sqrt{2}\,U_i$ |

Als Außenleiter $L_k$ im Sinne der Erfindung werden die k = 1 bis N Verbindungsleiter verstanden, die die freien Enden der Stränge der Sternpunktschaltung bzw. die Verbindungspunkte der Stränge der N-eck-Schaltung mit dem sekundärseitigen Gleichrichter verbinden. Bei einem dreiphasigen Energieübertragungssystem sind somit drei Außenleiter $L_1$, $L_2$ und $L_3$ mit dem Gleichrichter zu verbinden.

Die N Dioden ($D_1$, $D_k$,..., $D_N$) des Gleichrichters sind mit gleicher Durchlassrichtung hinter einander geschaltet, so dass immer die Kathode der Diode $D_k$ mit der Anode der Diode $D_{K+1}$ mit k = 1 bis N-1 elektrisch miteinander verbunden ist. Parallel zur Reihenschaltung der N Dioden ist der ausgangsseitige Glättungskondensator $C_{gr}$ geschaltet, an dem die Ausgangsspannung $U_A$ abgreifbar ist. Die Außenleiter $L_k$ mit k = 1 bis N, sind jeweils mit der Anode der Diode ($D_k$) verbunden.

Die erfindungsgemäße Gleichrichterschaltung ist einfach in ihrem Aufbau und besteht vorteilhaft nur aus wenigen Bauelementen. Bei einer gegebenen Nennleistung muss vorteilhaft nur eine kleine Blindleistungskompensation im Sekundärschwingkreis vorgenommen werden, so dass eine kleinere Dimensionierung der benötigten Resonanzkondensatoren vorgenommen werden kann. Hierdurch verringern sich vorteilhaft das Volumen und das Gewicht der Sekundärseite des Energieübertragungssystems.

Zudem werden weniger Gleichrichter-Dioden benötigt, wodurch zusätzlich Kosten und Gewicht eingespart werden können. Der einzige sich aus der erfindungsgemäßen Schaltung ergebene Nachteil ist, dass ein höherer Glättungsbedarf im Ausgangskreis erforderlich ist. Im Vergleich zu den Vorteilen kann dieser kleine Nachteil jedoch in Kauf genommen werden.

Durch eine Schalteinrichtung, die durch ein einziges Schaltelement gebildet ist, können alle Außenleiter miteinander kurzgeschlossen werden, so dass kurzzeitig kein Strom den Glättungskondensator auflädt. In dieser Zeit werden die Resonanzschwingkreise aufgeladen. Durch Aufheben des Kurzschlusses, was durch Öffnen der Schalteinrichtung bzw. des Schaltelementes erfolgt, wird die gespeicherte Energie der Resonanzschwingkreise zur Aufladung des Glättungskondensators und Speisung des Verbrauchers genutzt. Durch die freie Wahl der Taktung des Schaltelementes kann der Gleichrichter als Hochsteller betrieben werden, wodurch vorteilhaft eine Einstellung oder Einregelung einer in Grenzen beliebigen Ausgangsspannung möglich ist.

Für die Bildung des Kurzschlusses der Außenleiter wird lediglich ein Schalter benötigt, der den Außenleiter $L_n$ mit dem Außenleiter $L_1$ verbindet, womit über die Dioden $D_1$ bis $D_{N-1}$ der Kurzschluss aller Außenleiter $L_k$ erfolgt. Das elektrische Schaltelement kann dabei ein Transistor, insbesondere ein IGBT, JFET oder MOSFET, sein, der mit seinem Kollektor bzw. Drain mit dem Verbindungspunkt $P_N$ bzw. dem Außenleiter $L_N$ und mit seinem Emitter bzw. Source mit dem die Masse bildenden Anschlusspunkt $A_1$ verbunden ist.

Das Schaltelement bzw. die Schalteinrichtung wird mittels einer Steuereinrichtung gesteuert, wobei die Steuereinrichtung die Schalteinrichtung oder das Schaltelement, insbesondere mit einem an der Basis bzw. am Gate anliegenden Ansteuersignal, steuert. Mittels der Steuereinrichtung kann die geforderte Ausgangsspannung bzw. der geforderte Ausgangsstrom eingeregelt bzw. eingestellt werden.

Dabei schaltet die Steuereinrichtung das Schaltelement bzw. die Schalteinrichtung, insbesondere mittels frei einstellender Zweipunktregelung oder Pulsweitenmodulation (PWM), ein- und aus und regelt damit die Ausgangsspannung.

Damit wenige Schaltverluste entstehen, schaltet die Steuereinrichtung das Schaltelement bzw. die Schalteinrichtung immer nur dann ein, wenn keine Spannung an dem Schaltelement bzw. der Schalteinrichtung selbst anliegt. Dagegen ist es nicht entscheidend, dass das Schaltelement bzw. die Schalteinrichtung immer nur dann ausgeschaltet bzw. der Kurzschluss zwischen den Außenleitern nur dann aufgehoben wird, wenn im Schalter oder den Dioden kein Strom fließt.

Wesentlich dabei ist, dass das Schaltmittel für mindestens eine Periode zum Freilaufen der Resonanzschwingkreise geöffnet ist. Die Schaltperiode des Schaltmittels kann dabei ein Vielfaches der Resonanzperiode der Übertragungsfrequenz des Energieübertragungssystems betragen.

Der erfindungsgemäße Gleichrichter erhöht zudem vorteilhaft die funktionale Sicherheit des gesamten Systems. Sofern eine oder mehrere Dioden eines herkömmlichen Vollbrückengleichrichters defekt sind, so werden diese Dioden in der Regel niederohmig, wodurch der Vollbrückengleichrichter für die betreffende Phase zum Spannungsverdoppler wird. Durch die dadurch ansteigende Ausgangsspannung können die nachgeschalteten elektrischen Komponenten, wie z.B. Batterie oder Elektronik, beschädigt werden. Sofern hingegen eine oder mehrere Dioden des erfindungsgemäßen Gleichrichters aufgrund eines Defektes oder Zerstörung niederohmig werden, so hat dies keine negativen Auswirkungen auf die nachgeschalteten Komponenten, da durch diesen Fehler die Ausgangsspannung sinkt.

Der erfindungsgemäße steuerbare Verdopplergleichrichter hat vorteilhaft einen höheren Wirkungsgrad, da ein sonst benötigter DC-DC-Wandler entfällt und das Spannungsmittel vorteilhaft spannungslos geschaltet werden kann. Trotz der Mehrphasigkeit wird lediglich ein Halbleiter-Schalter als Schaltmittel benötigt. Durch eine kleinere zu kompensierende Blindleistung baut die Sekundärseite des Energieübertagungssystem kleiner und hat ein geringeres Gewicht. Zusätzlich ist das System kostengünstiger aufgrund der wenigen Bauteile und des nicht benötigten DC-DC-Wandlers.

Wie bereits erläutert, ist der erfindungsgemäße sekundärseitige Gleichrichter für ein Energieübertragungssystem mit mehr als zwei Phasen, insbesondere ungerade Phasenzahlen größer gleich drei, geeignet. Beschrieben ist somit auch ein sekundärseitiger Gleichrichter, wobei das Energieübertragungssystem drei, fünf, sieben oder 2n+1 Phasen aufweist.

Die Erfindung beansprucht gleichsam ein Energieübertragungssystem und eine Pickup, bei dem ein erfindungsgemäßer sekundärer Gleichrichter verwendet wird.

Nachfolgend wird der erfindungsgemäße sekundärseitige Gleichrichter anhand von Zeichnungen und Schaltbildern näher erläutert.

Es zeigen:

Fig. 1:     Die Sekundärseite eines dreiphasigen Energieübertragungssystems mit einem nachgeschalteten Vollbrückengleichrichter, wobei die Resonanzschwingkreise im Stern geschaltet sind;

Fig. 2:     die Sekundärseite eines dreiphasigen Energieübertragungssystems mit einem nachgeschalteten Vollbrückengleichrichter, wobei die Resonanzschwingkreise im Dreieck geschaltet sind;

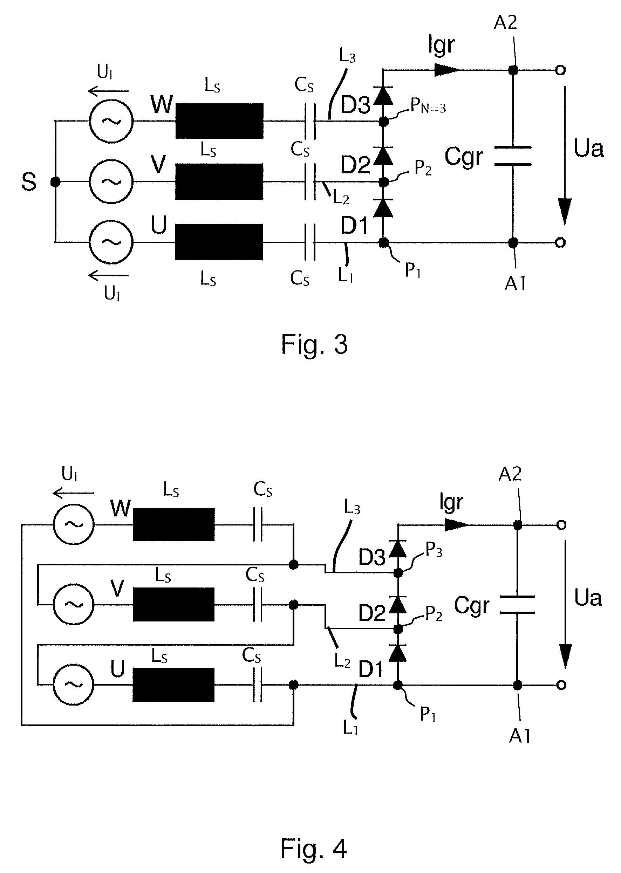

Fig. 3:     erfindungsgemäßer sekundärseitiger Gleichrichter für ein dreiphasiges Energieübertragungssystem, bei dem der Gleichrichter als Spannungsverdoppler arbeitet und die die Resonanzschwingkreise im Stern geschaltet sind;

Fig. 4:     erfindungsgemäßer sekundärseitiger Gleichrichter für ein dreiphasiges Energieübertragungssystem, bei dem der Gleichrichter als Spannungsverdoppler arbeitet und die die Resonanzschwingkreise im Dreieck geschaltet sind;

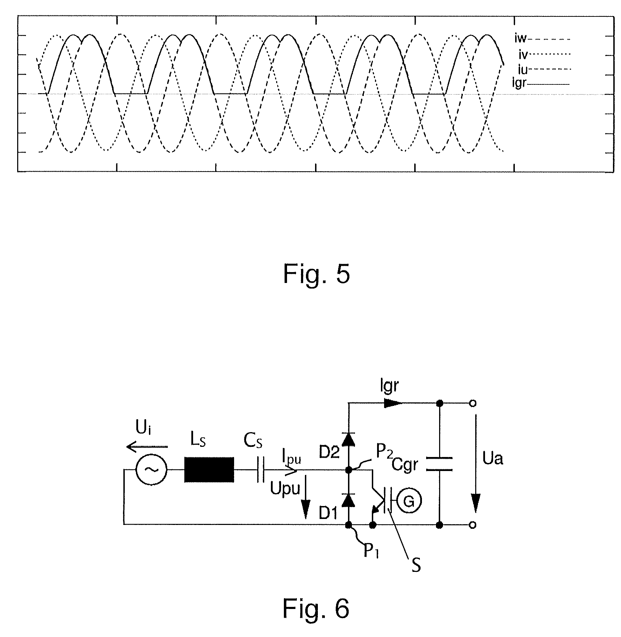

Fig. 5:     Stromdiagramm für Schaltung gemäß Figur 3;

Fig. 6:     Ersatzschaltbild für einen einphasigen Hochsetzsteller;

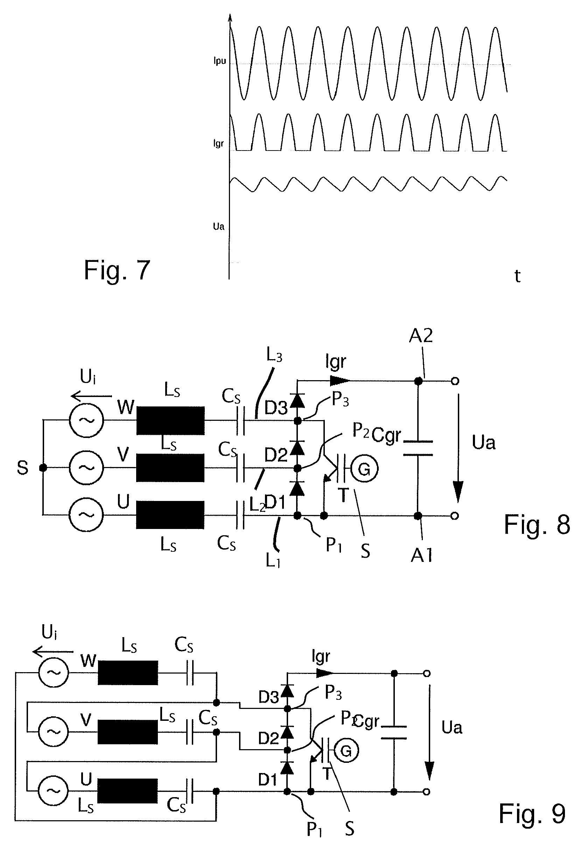

Fig. 7:     Strom- und Spannungsdiagramm für einen einphasigen hochsetzenden Gleichrichterverdoppler gemäß Figur 6;

Fig. 8:     erfindungsgemäßer dreiphasiger Gleichrichter gemäß Fig. 3 mit zusätzlichem Schaltmittel zum Hochsetzen der Ausgangsspannung;

Fig. 9:     erfindungsgemäßer Gleichrichter gemäß Fig. 4 mit zusätzlichem Schaltmittel zum Hochsetzen der Ausgangsspannung;

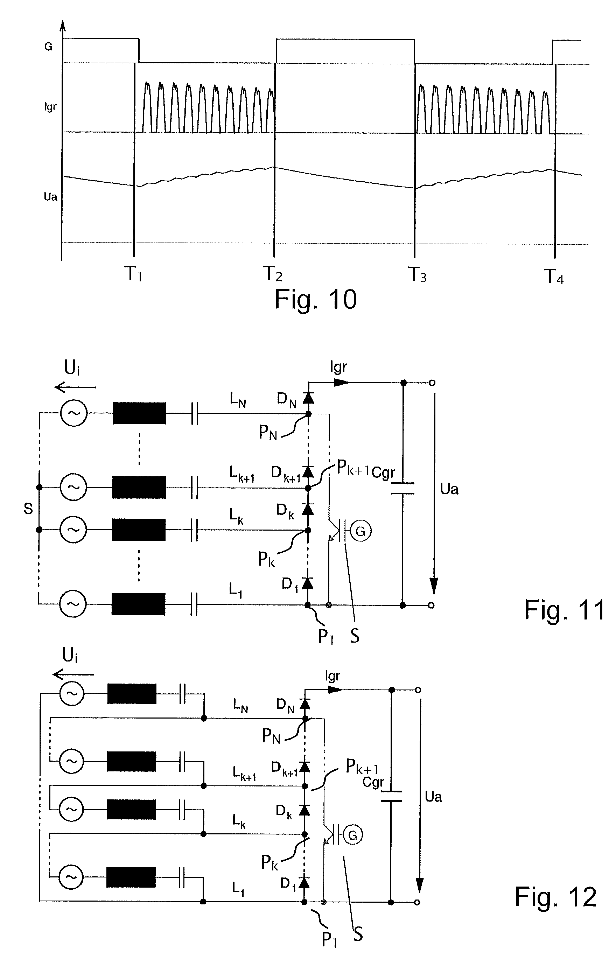

Fig. 10:    Strom- und Spannungsdiagramm für einen dreiphasigen hochsetzenden Gleichrichterverdoppler gemäß Figur 8 oder 9;

Fig. 11:    erfindungsgemäßer Gleichrichter mit zusätzlichem Schaltmittel zum Hochsetzen der Ausgangsspannung für ein N-phasiges Energieübertragungssystem, bei dem die sekundärseitigen Resonanzschwingkreise im Stern geschaltet sind;

Fig. 12:    Gleichrichter gemäß Fig. 11, wobei die sekundärseitigen Resonanzschwingkreise im N-Eck geschaltet sind.

Gegenüber den in den Figuren 1 und 2 dargestellten herkömmlichen dreiphasigen Vollbrückengleichrichtern unterscheidet sich der erfindungsgemäße sekundärseitige Gleichrichter, wie er in den Figuren 3 und 4 für die Stern- und Dreieckschaltung der sekundärseitigen Resonanzschwingkreise dargestellt ist, dadurch, dass die Anzahl der benötigten Dioden halbiert ist. Die Verbindung der Außenleiter $L_1$, $L_2$ und $L_3$ mit den Dioden $D_1$, $D_2$, und $D_3$ unterscheidet sich bei der Stern- und Dreiecksschaltung nicht. Die Schaltung bewirkt, dass die verketteten induzierten Spannungen $U_i$ des Sekundärkreises eines dreiphasigen Systems verdoppelt werden. Bei der Sternschaltung gemäß Figur 3 wird dies mittels der Dioden D1 und D2 erreicht. Die Diode D1 schließt über eine Halbperiode die Stränge U und V kurz. Die Diode D2 schließt über eine Halbperiode die Stränge V und W kurz. Die Reihenschaltung der Dioden D1 und D2 schließt über eine Halbperiode die Stränge U und W kurz. Während des Kurzschlusses über die jeweilige Diode(n) wird der jeweilige Resonanzkondensator $C_s$ auf die Spitzenspannung der jeweiligen Phase geladen. In der anschließenden anderen Halbperiode läuft über die Diode D3 der Resonanzschwingkreis auf den Lastkreis mit dem Glättungskondensator $C_{gr}$ frei und lädt diesen auf die Summe der momentanen induzierten Spannung und der gespeicherten Kondensatorspannung der vorherigen Halbperiode auf. Die Ausgangsspannung $U_A$ am Ausgang des Gleichrichters ist somit doppelt so hoch wie im herkömmlichen B6-Gleichrichter gemäß der Figuren 1 und 2.

Die Figur 5 zeigt den Verlauf der einzelnen Ströme in den Phasen bzw. Strängen u, v, w und den Verlauf des Gleichrichterstromes $I_{gr}$ in dem Glättungskondensator $C_{gr}$ für eine Schaltung gemäß Figur 3 oder 4. Durch den Spannungsverdoppler lückt der Strom $I_{gr}$ über eine Dauer von 120°. Um eine hinreichende Glättung zu erzielen ist es daher eventuell erforderlich einen Glättungskondensator $C_{gr}$ mit größerer Kapazität zu verwenden.

Anhand der Figuren 6 bis 10 wird erläutert, wie die in den Figuren 3 bis 5 dargestellten Verdopplerschaltungen mit einfachen Mitteln zu Gleichrichtern umgewandelt werden können, bei denen eine Einstellung/Regelung der Ausgangsspannung möglich ist.

Zum besseren Verständnis wird zunächst anhand der Figur 6 ein einphasiger Verdoppler erläutert, bei dem ein Reihenschwingkreis $L_s$-$C_s$ über einen Halbleiter-Schalter S für eine kurze Zeit kurzgeschlossen werden kann. Während des Kurzschlusses fließt der Strom der positiven Halbperiode nur im Schwingkreis, wodurch sich der Schwingkreis auflädt. Sobald der Halbleiterschalter S geöffnet wird, entlädt sich der Schwingkreis $L_s$-$C_s$ auf den Ausgangskondensator $C_{gr}$ und gibt damit die Leistung an die Last weiter. Mittels des Schaltmittels S ist somit der reine Gleichrichterverdoppler zu einem Hochsetzsteller geworden. Dieser wird im AC-Kreis geschaltet. Der Schalter S kann dabei entweder synchron zum Strom $I_{gr}$ geschaltet werden, so dass die Einschaltdauer die Stellgröße darstellt. Es ist jedoch ebenfalls möglich, wenn nur dann geschaltet wird, wenn die antiparallele Diode Strom führt und damit der Schalter S spannungslos geschaltet wird. Bei der letzteren Variante stellt das Verhältnis von Einschaltdauer zu Ausschaltdauer die Stellgröße dar. Die Einschaltzeit des Schaltmittels S ist dabei meist ein Vielfaches der Periode der Übertragungsfrequenz des Energieübertragungssystems.

Die Figur 7 zeigt die Ströme und Spannungen des in Figur 6 dargestellten und erläuterten einphasigen steuerbaren Verdopplergleichrichters während der Zeit, in der das Schaltmittel S nicht eingeschaltet ist und somit der Resonanzschwingkreis nicht kurzgeschlossen ist. Sobald das Schaltmittel S geschlossen bzw. eingeschaltet wird, wird die Diode D1 kurzgeschlossen, so dass $I_{gr}$ Null wird, wobei gleichzeitig die Ausgangsspannung abzusinken beginnt. Sobald das Schaltmittel S geöffnet wird, entladen sich die aufgeladenen Schwingkreiskondensatoren $C_s$ und der Strom $I_{gr}$ lädt den Glättungskondensator auf. Je nach Länge der Einschaltzeit und der Länge der Ausschaltzeit des Schaltmittels S und in Abhängigkeit der Größe der last wird eine bestimmte Ausgangsspannung $U_A$ eingestellt bzw. bei variablen Ein- und Ausschaltzeiten eingeregelt.

Das in den Figuren 6 und 7 beschriebenen Schaltungsprinzip kann auch auf ein mehrphasiges Energieübertagungssystem angewendet werden. Adaptiert man das Schaltungsprinzip der Schaltung in Figur 6 auf ein mehrphasiges System, muss ein Kurzschluss aller Phasen bzw. Stränge u, v, w erfolgen, damit die Symmetrie des Systems gewährleistet ist.

Dies wird gemäss der Erfindung durch das in den Figuren 8 und 9 gezeigte Schaltmittel S erreicht.

Das Schaltmittel S in Form eines Halbleiter-Schalters schließt die äußersten Phasen mit einander kurz, so dass die Dioden $D_1$ und $D_2$, die sich dazwischen befinden auch leitend werden und zum Kurzschluss beitragen. Die gleiche Gleichrichterschaltung kann sowohl für die Stern- als auch für die Dreckschaltung der Stränge u, v und w verwendet werden.

Das Verhalten der Ströme und Spannungen während der Umschaltvorgänge ist in Figur 10 gezeigt. Während der Halbleiter-Schalter S geschlossen (G = 1) ist, fließt kein Strom $I_{gr}$ in den Ausgangskreis, so dass sich der Glättungskondensator $C_{gr}$ über die nicht dargestellte Last zu entladen beginnt. Während dieser Zeit wird die von der Primärseite des Energieübertragungssystems übertragene Energie im Schwingkreis gespeichert. Wenn zum Zeitpunkt $T_2$ bzw. $T_4$ das Schaltmittel S geöffnet (G = 0) wird, fließt der Strom $I_{gr}$ in Form der Kombination aus den gespeicherten Halbperioden und der aktuellen induzierten Halbperiode in die Last und den Glättungskondensator $C_{gr}$ und lädt diesen auf, wodurch die Ausgangsspannung $U_A$ ansteigt. Je nach gewähltem Tastverhältnis zwischen Ein- und Ausschaltdauer kann die Ausgangsspannung $U_A$ auf eine bestimmte Spannung hochgeregelt bzw. hochgesetzt werden.

Zum Hochstellen der Ausgangsspannung $U_A$ auf eine maximale Ausgangsspannung $U_{A,max}$ wird das Schaltmittel S während eines Taktes zu ca. 95% geschlossen und zu ca. 5% geöffnet. Damit sich eine gute Glättung ergibt, kann entweder die Kapazität des Glättungskondensators Cgr vergrößert oder mindestens eine weitere Glättungsstufe zur Glättung der Ausgangsspannung $U_A$ vorgesehen werden.

Die Figuren 11 und 12 zeigen Schaltungen für Energieübertragungssystem mit mehr als drei Phasen. Es wird deutlich, dass für ein N-Phasiges Übertragungssystem stets nur eine Anzahl von N Dioden $D_k$ benötigt werden. Zum Hochsetzen wird unabhängig von der Phasenanzahl lediglich ein Schaltmittel S benötigt.

**Patentansprüche**

1. Sekundärseitiger Gleichrichter der an einem induktiven n-phasigen Energieübertragungssystem angeschlossen ist, wobei n größer gleich Drei ist und das Energieübertragungssystem in jedem Strang (W, V, U) einen Resonanzschwingkreis mit jeweils mindestens einer Induktivität ($L_s$) und mindestens einer Kapazität ($C_s$) aufweist, und die sekundärseitigen Resonanzschwingkreise mit primärseitigen Resonanzschwingkreisen magnetisch koppelbar sind, wobei die sekundärseitigen Resonanzschwingkreise im Stern oder Vieleck geschaltet und über Außenleiter ($L_1$, ...,$L_k$,...., $L_N$) mit einem Gleichrichter in Verbindung sind,
**dadurch gekennzeichnet, dass**
der Gleichrichter eine Reihenschaltung von genau n Dioden ($D_1$, $D_k$,..., $D_N$) mit gleicher Durchlassrichtung aufweist, wobei zur Reihenschaltung ein Glättungskondensator ($C_{gr}$) parallel geschaltet ist und die Ausgangsspannung ($U_A$) des Gleichrichters an den Anschlusspunkten ($A_1$, $A_2$) des Glättungskondensators ($C_{gr}$) anliegt, wobei der Außenleiter ($L_k$) mit der Anode der Diode ($D_k$) für alle k = 1 bis N verbunden ist, wobei ein erster Anschlusspunkt ($A_1$) des Glättungskondensators mit dem Außenleiter ($L_1$) in Verbindung ist, der mit der Anode einer ersten Diode ($D_1$) direkt verbunden ist und die Kathode der N-ten Diode ($D_N$) mit einem weiteren Anschlusspunkt ($A_2$) des Glättungskondensators in Verbindung ist,
wobei mittels einer Schalteinrichtung, die durch ein einziges Schaltelement (S) gebildet ist, alle Außenleiter ($L_1$,..., $L_k$,..., $L_N$) miteinander wahlweise kurzschließbar sind.

2. Sekundärseitiger Gleichrichter nach Anspruch 1, **dadurch gekennzeichnet, dass** das elektrische Schaltelement (S) den Verbindungspunkt ($P_N$) bzw. den Außenleiter ($L_N$) und den Anschlusspunkt ($A_1$) verbindet.

3. Sekundärseitiger Gleichrichter nach Anspruch 1 oder 2, **dadurch gekennzeichnet, dass** das elektrische Schaltelement (S) ein Transistor, insbesondere ein IGBT, JFET oder MOSFET, ist.

4. Sekundärseitiger Gleichrichter nach Anspruch 3, **dadurch gekennzeichnet, dass** der Transistor (S) mit seinem Kollektor bzw. Drain mit dem Verbindungspunkt ($P_N$) bzw. dem Außenleiter ($L_N$) und mit seinem Emitter bzw. Source mit dem Anschlusspunkt ($A_1$) verbunden ist.

5. Sekundärseitiger Gleichrichter nach einem der Ansprüche 1 bis 4, **dadurch gekennzeichnet, dass** eine Steuereinrichtung (E) die Schalteinrichtung oder das Schaltelement (S), insbesondere mit einem an der Basis bzw. am Gate anliegenden Ansteuersignal (G), steuert.

6. Sekundärseitiger Gleichrichter nach Anspruch 5, **dadurch gekennzeichnet, dass** die Steuereinrichtung (E) mittels der Schalteinrichtung bzw. des Schaltelementes (S) die Ausgangsspannung ($U_{A,ist}$) bzw. den Ausgangsstrom auf eine Soll-Ausgangsspannung ($U_{A,soll}$) bzw. den Soll-Ausgangsstrom einregelt.

7. Sekundärseitiger Gleichrichter nach Anspruch 6, **dadurch gekennzeichnet, dass** die Steuereinrichtung (E) das Schaltelement bzw. die Schalteinrichtung (S), insbesondere mittels frei einstellenden Zweipunktregelung oder Pulsweitenmodulation (PWM), ein- und ausschaltet und damit eine Soll-Ausgangsspannung ($U_{A,soll}$) bzw. einen Soll-Ausgangsstrom einregelt.

8. Sekundärseitiger Gleichrichter nach einem der vorhergehenden Ansprüche, **dadurch gekennzeichnet, dass** die Steuereinrichtung (E) das Schaltelement bzw. die Schalteinrichtung (S) immer nur dann ausschaltet und damit den Kurzschluss zwischen den Außenleitern aufhebt, wenn im Schalter (S) oder den Dioden ($D_1$ bis $D_{N-1}$) kein Strom fließt.

9. Sekundärseitiger Gleichrichter nach einem der vorhergehenden Ansprüche, **dadurch gekennzeichnet, dass** die Einrichtung (E) das Schaltmittel (S) nur dann einschaltet, wenn keine Spannung an dem Schaltelement (S) anliegt.

10. Sekundärseitiger Gleichrichter nach einem der vorhergehenden Ansprüche, **dadurch gekennzeichnet, dass** die Einrichtung (E) das Schaltmittel (S) zum Einstellen oder Einregeln der Ausgangsspannung $U_A$ oder des Ausgangsstroms $I_A$ mit einer Frequenz schaltet, die kleiner oder gleich der Übertragungsfrequenz des Energieübertragungssystems ist.

11. Sekundärseitiger Gleichrichter nach einem der vorhergehenden Ansprüche, **dadurch gekennzeichnet, dass** die Schaltperiode des Schaltmittels (S) ein Vielfaches der Periode der Übertragungsfrequenz des Energieübertragungssystems beträgt.

12. Sekundärseitiger Gleichrichter nach einem der vorhergehenden Ansprüche, **dadurch gekennzeichnet, dass** das Schaltmittel (S) für mindestens eine Periode von der Energieübertragungsfrequenz zum Freilaufen der Resonanzschwingkreise geöffnet ist.

13. Pickup für ein mehrphasiges Energieübertragungssystems mit im Stern oder Vieleck verschalteten sekundärseitigen Resonanzschwingkreisen und einem sekundärseitigen Gleichrichter nach einem der Ansprüche 1 bis 12.

14. Mehrphasiges Energieübertragungssystems mit im Stern oder Vieleck verschalteten sekundärseitigen Resonanzschwingkreisen mit einem sekundärseitigen Gleichrichter nach einem der Ansprüche 1 bis 12.

**Claims**

1. Secondary-sided rectifier which is connected to an inductive n-phase energy transfer system, wherein n is greater equal to three and the energy transfer system comprises a resonant oscillating circuit with at least one inductance (Ls) in each case and at least one capacitance (Cs) in every line (W, V, U), and the secondary-sided resonant oscillating circuits can be magnetically coupled to primary-sided resonant oscillating circuits, wherein the secondary-sided resonant oscillating circuits are connected in star or polygon and are in connection with a rectifier via external conductors ($L_1$, ...,$L_k$,...., $L_N$),
**characterized in that**
the rectifier comprises a series connection of precisely n diodes ($D_1$, $D_k$,..., $D_N$)
having the same forward direction, wherein a smoothing capacitor ($C_{gr}$) is connected in parallel to the series connection and the output voltage ($U_A$) of the rectifier is applied to the connection points ($A_1$, $A_2$) of the smoothing capacitor ($C_{gr}$), wherein the external conductor ($L_K$) is connected with the anode of the diode ($D_K$) for all k = 1 to N, wherein a first connection point ($A_1$) of the smoothing capacitor is in connection with the external conductor ($L_1$), which is directly connected with the anode of a first diode ($D1_1$)
and the cathode of the N-th diode ($D_N$) is in connection with another connection point ($A_2$) of the smoothing capacitor, wherein with the aid of a switching device, which is formed by a single switch element (S), all external conductors ($L_1$,..., $L_k$,..., $L_N$) can be selectively short-circuited with one another.

2. Secondary-sided rectifier according to claim 1, **characterized in that** the electrical switch element (S) connects the junction ($P_N$) or the external conductor ($L_N$) and the connection point ($A_1$).

3. Secondary-sided rectifier according to claim 1 or 2, **characterized in that** the electrical switch element (S) is a transistor, especially an IGBT, JFET or MOSFET.

4. Secondary-sided rectifier according to claim 3, **characterized in that** the transistor (S) with its collector or drain is connected with the junction ($P_N$) or the external conductor ($L_N$) and with its emitter or source with the connection point ($A_1$).

5. Secondary-sided rectifier according to one of the claims 1 to 4, **characterized in that** a control device (E) controls the switching device or the switch element (S), in particular with a control pulse (G) applied to the base or the gate.

6. Secondary-sided rectifier according to claim 5, **characterized in that** the control device (E) by means of the switching device or the switch element (S) adjusts the output voltage ($U_{A,ist}$) or the output current to a set output voltage ($U_{A,soll}$) or the set output current.

7. Secondary-sided rectifier according to claim 6, **characterized in that** the control device (E) switches the switch element or the switching device (S) on and off, especially by means of a freely adjusting two point control or pulse width modulation (PWM), and thus adjusts a set output voltage ($U_{A,soll}$) or a set output current.

8. Secondary-sided rectifier according to one of the preceding claims, **characterized in that** the control device (E) only switches the switch element or the switching device (S) off and thus breaks the short circuit between the external conductors if there is no current flowing in the switch (S) or the diodes ($D_1$ to $D_M$).

9. Secondary-sided rectifier according to one of the preceding claims **characterized in that** the device (E) only switches the switching means (S) on if no voltage is applied to the switch element (S).

10. Secondary-sided rectifier according to one of the preceding claims, **characterized in that** the device (E) activates the switching means (S) for setting or adjusting the output voltage $U_A$ or the output current $I_A$ with a frequency, which is smaller or equal to the transmission frequency of the energy transfer system.

11. Secondary-sided rectifier according to one of the preceding claims, **characterized in that** the switching period of the switching means (S) is a multiple of the period of the transmission frequency of the energy transfer system.

12. Secondary-sided rectifier according to one of the preceding claims, **characterized in that** the switching means (S) is opened for at least one period of the energy transfer frequency for freewheeling of the resonant oscillating circuits.

13. Pickup for a multi-phase energy transfer systems with secondary-sided resonant oscillating circuits connected in star or polygon and a secondary-sided rectifier according to one of the claims 1 to 12.

14. Multi-phase energy transfer systems with secondary-sided resonant oscillating circuits connected in star or polygon and with a secondary-sided rectifier according to one of the claims 1 to 12.

**Revendications**

1. Redresseur au côté secondaire, qui est branché à un système de transfert d'énergie inductif à n phases, dans lequel n est supérieur ou égal à trois et le système de transfert d'énergie comprend dans chaque branche (W, V, U) un circuit oscillant résonant avec respectivement au moins une inductivité ($L_s$) et au moins une capacité ($C_s$), et les circuits oscillants résonants au côté secondaire peuvent être couplés de manière magnétique à des circuits oscillants résonants au côté primaire, dans lequel les circuits oscillants résonants au côté secondaire sont montés en étoile ou en polygone et sont en liaison par un conducteur externe ($L_1$, ..., $L_k$, ..., $L_N$) avec un redresseur,
**caractérisé en ce que**
le redresseur comprend un circuit série de précisément n diodes ($D_1$, $D_k$, ..., $D_N$) ayant le même sens de passage, dans lequel un condensateur de lissage (Cgr) est monté en parallèle au circuit série et la tension de sortie ($U_A$) du redresseur est présente aux points de branchement ($A_1$, $A_2$) du condensateur de lissage ($C_{gr}$), dans lequel le conducteur externe ($L_k$) est relié à l'anode de la diode ($D_k$) pour tous les k = 1 à N, dans lequel un premier point de

branchement ($A_1$) du condensateur de lissage est en liaison avec le conducteur externe ($L_1$) qui est relié directement à l'anode d'une première diode ($D_1$), et la cathode de la Nième diode ($D_N$) est en liaison avec un autre point de branchement ($A_2$) du condensateur de lissage,

dans lequel, au moyen d'un système de commutation qui est formé d'un seul élément de commutation (S), tous les conducteurs externes ($L_1$, ..., $L_k$, ... , $L_N$) peuvent être court-circuités au choix les uns avec les autres.

2. Redresseur au côté secondaire selon la revendication 1, **caractérisé en ce que** l'élément de commutation électrique (S) relie le point de liaison ($P_N$) ou le conducteur externe ($L_N$) et le point de branchement ($A_1$).

3. Redresseur au côté secondaire selon la revendication 1 ou 2, **caractérisé en ce que** l'élément de commutation électrique (S) est un transistor, en particulier un transistor IGBT, JFET ou MOSFET.

4. Redresseur au côté secondaire selon la revendication 3, **caractérisé en ce que** le transistor (S) est relié par son collecteur ou son drain au point de liaison ($P_N$) ou au conducteur externe ($L_N$) et par son émetteur ou sa source au point de branchement ($A_1$).

5. Redresseur au côté secondaire selon l'une quelconque des revendications 1 à 4, **caractérisé en ce qu'**un système de commande (E) commande le système de commutation ou l'élément de commutation (S), en particulier avec un signal de commande (G) présent sur la base ou la grille.

6. Redresseur au côté secondaire selon la revendication 5, **caractérisé en ce que** le système de commande (E) régule au moyen du système de commutation ou de l'élément de commutation (S) la tension de sortie ($U_{A,ist}$) ou le courant de sortie sur une tension de sortie de consigne ($U_{A,soll}$) ou un courant de sortie de consigne.

7. Redresseur au côté secondaire selon la revendication 6, **caractérisé en ce que** le système de commande (E) active ou désactive l'élément de commutation ou le système de commutation (S), en particulier au moyen d'une régulation à deux positions librement réglable ou d'une modulation d'impulsions en durée (MID) et régule ainsi une tension de sortie de consigne ($U_{A,soll}$) ou un courant de sortie de consigne.

8. Redresseur au côté secondaire selon l'une quelconque des revendications précédentes, **caractérisé en ce que** le système de commande (E) désactive l'élément de commutation ou le système de commutation (S) et, ainsi supprime le court-circuit entre les conducteurs externes, uniquement si aucun courant ne traverse le commutateur (S) ou les diodes ($D_1$ à $D_{N\_1}$).

9. Redresseur au côté secondaire selon l'une quelconque des revendications précédentes, **caractérisé en ce que** le système (E) active le moyen de commutation (S) uniquement lorsqu'aucune tension n'est présente aux bornes de l'élément de commutation (S).

10. Redresseur au côté secondaire selon l'une quelconque des revendications précédentes, **caractérisé en ce que** le système (E) active le moyen de commutation (S) pour le réglage ou la régulation de la tension de sortie $U_A$ ou du courant de sortie $I_A$ avec une fréquence qui est inférieure ou égale à la fréquence de transfert du système de transfert d'énergie.

11. Redresseur au côté secondaire selon l'une quelconque des revendications précédentes, **caractérisé en ce que** la période de commutation du moyen de commutation (S) est un multiple de la période de la fréquence de transfert du système de transfert d'énergie.

12. Redresseur au côté secondaire selon l'une quelconque des revendications précédentes, **caractérisé en ce que** le moyen de commutation (S) est ouvert pendant au moins une période de la fréquence de transfert d'énergie pour le fonctionnement libre des circuits oscillants résonants.

13. Dispositif capteur pour un système de transfert d'énergie à plusieurs phases avec des circuits oscillants résonants au côté secondaire montés en étoile ou en polygone et avec un redresseur au côté secondaire selon l'une quelconque des revendications 1 à 12.

14. Système de transfert d'énergie à plusieurs phases avec des circuits oscillants résonants au côté secondaire montés en étoile ou en polygone avec un redresseur au côté secondaire selon l'une quelconque des revendications 1 à 12.

Fig. 1
(Stand der Technik)

Fig. 2
(Stand der Technik)

Fig. 3

Fig. 4

Fig. 5

Fig. 6

Fig. 7

Fig. 8

Fig. 9

Fig. 10

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP S6192172 A
- JP S60109766 A
- US 5936854 A
- US 2011198176 A1
- US 5047912 A
- US 4651268 A1
- US 20060034109 A1
- DE 1975239 A1